# EUROPÄISCHE PATENTANMELDUNG

(11) **EP 1 117 098 A2**
(43) Veröffentlichungstag der Anmeldung: **18.07.2001**
(21) Anmeldenummer: 00102727.5
(22) Anmeldetag: 10.02.2000
(51) Int. Cl.: G11B 33/04

(54) **Halter für Datenträgerhüllen**

(30) Priorität: 12.01.2000 DE 20000436 U
(71) Anmelder: Paul Henke GmbH & Co KG, 32584 Löhne (DE)
(72) Erfinder: Henke, Dieter, 32549 Bad Oeynhausen (DE)
(74) Vertreter: TER MEER STEINMEISTER & PARTNER GbR

(57) **Zusammenfassung**

Halter für flache, kastenförmige Datenträgerhüllen (14), mit mehreren übereinander angeordneten Gefachen (12), die die rückwärtigen Enden der Datenträgerhüllen in horizontaler und vertikaler Richtung mit geringem Spiel umschließen, dadurch gekennzeichnet, daß die Gefache (12) eine Tiefe aufweisen, die deutlich kleiner ist als die Hälfte der Tiefe der Datenträgerhüllen.

## Beschreibung

Die Erfindung betrifft einen Halter für flache, kastenförmige Datenträgerhüllen, mit mehreren übereinander angeordneten Gefachen, die die rückwärtigen Enden der Datenträgerhüllen in horizontaler und vertikaler Richtung mit geringem Spiel umschließen.

Solche Halter dienen insbesondere zur Archivierung von CD-Hüllen und haben häufig die Form eines Turms mit einer Vielzahl von Gefachen, in die die einzelnen CD-Hüllen mit dem größten Teil ihrer Tiefe eingeschoben werden können, so daß sie nur noch mit ihrem vorderen Ende, das dann bei der Entnahme leicht erfaßt werden kann, aus dem CD-Halter herausragen. Es ist auch bekannt, solche CD-Halter, insbesondere für Programm-CDs, hängend an einer Schreibtischreling oder dergleichen zu befestigen. In diesen Fällen, sowie generell bei beengten räumlichen Verhältnissen haben die bekannten CD-Halter jedoch den Nachteil, daß auch die leeren Gefache verhältnismäßig viel Platz beanspruchen und Hindernisse bilden können, an denen man beim Hantieren im Raum vor dem CD-Halter leicht anstoßen kann. Außerdem sind die leeren Gefache relativ unansehnlich, zumal sie leicht vollstauben und nur schlecht zu reinigen sind.

Aufgabe der Erfindung ist es, einen Halter der eingangs genannten Art zu schaffen, der raumsparend und reinigungsfreundlich ist.

Diese Aufgabe wird erfindungsgemäß dadurch gelöst, daß die Gefache eine Tiefe aufweisen, die deutlich kleiner ist als die Hälfte der Tiefe der Datenträgerhüllen.

Bei dem erfindungsgemäßen Halter liegen somit die Schwerpunkte der einzelnen Datenträgerhüllen außerhalb des Halters. Dennoch fallen die Hüllen nicht aus den Gefachen heraus, da sie mit ihren rückwärtigen Enden eng von den Gefachen umschlossen werden und deshalb in den Gefachen verkanten. Da sie auch in horizontaler Richtung eng umschlossen werden, können sie auch nicht um eine vertikale Achse gegeneinander verdreht werden, so daß die relativ weit frei auskragenden CD-Hüllen bündig miteinander ausgerichtet bleiben und somit ein optisch ansprechendes Erscheinungsbild bieten.

Der Vorteil des erfindungsgemäßen Halters besteht darin, daß die leeren Gefache nur wenig Platz beanspruchen, optisch unauffällig sind und sich aufgrund ihrer geringen Tiefe leicht reinigen lassen.

Vorteilhafte Ausgestaltungen der Erfindung ergeben sich aus den Unteransprüchen.

Bevorzugt weist der Halter eine variable Anzahl von Gefachen auf, die durch aufeinander gesteckte und zugfest verbundene Gefachelemente gebildet werden, die als eine Einheit an einem Tragelement gehalten sind. Bei dem Tragelement kann es sich um einen Standfuß oder um einen Halter für die Wandbefestigung handeln.

Die Gefachelemente weisen bevorzugt einen flachen Boden in der Form einer in Breitenrichtung langgestreckten Ellipse auf und sind an beiden seitlichen Enden mit Abstandshaltern versehen, die die seitlichen Begrenzungen der Gefache und zugleich die Steckverbinder für die Verbindung mit den sich unten und oben anschließenden Gefachelementen bilden. Auf diese Weise ist sichergestellt, daß die Gefachelemente stabil in ihrer miteinander ausgerichteten Position gehalten werden.

Bevorzugt weisen die Gefachelemente an der Rückseite einen weiteren Abstandshalter auf, der ebenfalls als Steckverbinder ausgebildet sein kann. Hierdurch werden die Gefachböden in ihrer waagerechten oder leicht geneigten Position stabilisiert.

Die zugfeste Verbindung zwischen den einzelnen Gefachelementen kann durch Verrastung erreicht werden. In einer besonders bevorzugten Ausführungsform weisen jedoch die rückseitigen Abstandshalter miteinander fluchtende vertikale Bohrungen auf, durch die eine zu dem Tragelement gehörende Stange hindurchgesteckt werden kann. Die zugfeste Verbindung der Gefachelemente kann dann durch diese Stange, und durch eine Stütze am unteren Ende sowie durch einen Stopfen am oberen Ende erreicht werden. Bei einem freistehenden Halter ragt die Stange vom Standfuß auf. Bei Wandmontage ist vorzugsweise am oberen Ende der Stange ein Aufhänger angebracht, und am unteren Ende kann eine Wandstütze angebracht sein, mit der sich der Halter an der Wand abstützt.

Bei dem Aufhänger kann es sich um ein hakenförmiges Element handeln, das von der vertikalen Stange durchsetzt wird und mit aufwärts gekröpften Klauen in einer hinterschnittenen Nut einer waagerecht an der Wand zu montierenden Profilschiene einhakbar ist, wie beispielsweise in DE 299 22 684 U beschrieben wird. Vorzugsweise ist dieser Aufhänger zugleich als Steckverbinder ausgebildet, der zu dem rückseitigen Abstandshalter des obersten Gefachelements kompatibel ist. Die Gewichtskraft des Halters kann dann durch einen auf das obere Ende der Stange aufgeschraubten oder aufgerasteten Stopfen aufgenommen werden, der sich auf dem Aufhänger abstützt.

In einer besonders bevorzugten Ausführungsform sind die vertikalen Bohrungen der rückseitigen Abstandshalter der Gefachelemente in einem Vorsprung des Abstandshalters ausgebildet, der in seiner Breite und Tiefe an die Breite und Tiefe der erwähnten hinterschnittenen Nut der Profilschiene angepaßt ist. In diesem Fall läßt sich die Profilschiene wahlweise auch vertikal an der Wand montieren, und die Abstandshalter der Gefachelemente lassen sich mit in der hinterschnittenen Nut befestigten oberen und unteren Klemmelementen so an der Profilschiene fixieren, daß ihre Vorsprünge in die hinterschnittene Nut eingreifen. Die vertikale Profilschiene bildet dann das Tragelement des Halters und stellt zugleich die zugfeste Verbindung zwischen den Gefachelementen her. Die oberen und unteren Klemmelemente können über Steckverbinder mit den Abstandshaltern des obersten und untersten Gefachelements in Eingriff stehen. Wahlweise kann die Verbindung zwischen den Klemmelementen und den Gefachelementen jedoch auch durch eine durchgesteckte Stange erreicht werden.

Im folgenden werden Ausführungsbeispiele der Erfindung anhand der Zeichnung näher erläutert.

Es zeigen:
- Fig. 1: eine perspektivische Explosionsdarstellung eines freistehenden Halters;
- Fig. 2: einen vertikalen Schnitt durch ein Gefachelement des Halters;
- Fig. 3: eine perspektivische Explosionsdarstellung eines Halters für die Wandmontage, der hängend an einer waagerechten Profilschiene gehalten ist; und
- Fig. 4: eine perspektivische Explosionsdarstellung eines Halters für die Wandmontage, bei dem Gefachelemente unmittelbar an einer vertikalen Profilschiene gehalten sind.

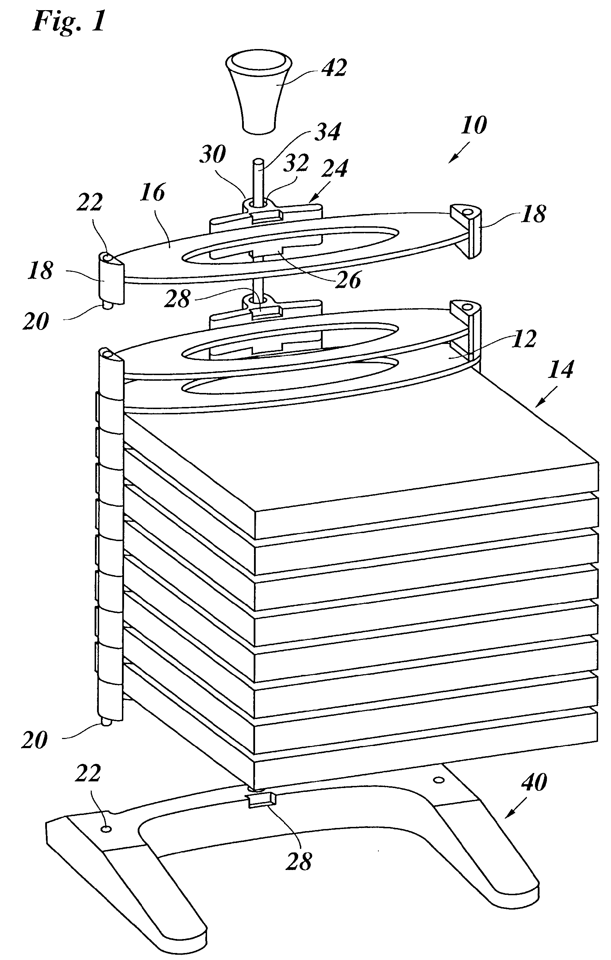

Der in Figur 1 gezeigte Halter weist eine Vielzahl von als Kunststoff-Spritzteile ausgebildeten Gefachelementen 10 auf, durch die Gefache 12 zur Aufnahme von flachen, kastenförmigen Hüllen 14, beispielsweise CD Hüllen, gebildet werden. Die Tiefe der Gefache 12 beträgt nur etwa 1/3 der Tiefe der Hüllen 14, so daß nur die rückwärtigen Enden der Hüllen mit geringem Spiel von den Gefachen umschlossen werden. Die Hüllen 14 werden somit aufgrund ihres Eigengewichts durch Verkantung stabil in einer Position gehalten, in der sie in vertikaler Richtung miteinander ausgerichtet sind.

Jedes Gefachelement 10 weist einen flachen Boden 16 auf, der im Grundriß die Form einer in Breitenrichtung langgestreckten, in der Mitte durchbrochenen Ellipse hat. Jeder Boden 16 bildet die untere Begrenzung eines Gefaches 12 und zugleich die obere Begrenzung des nächsttieferen Gefaches.

An beiden Enden des Bodens 16 sind Abstandshalter 18 angeformt, durch die der vertikale Abstand zwischen den Böden 16 auf ein der Höhe der Hüllen 14 entsprechendes Maß eingestellt wird. Diese Abstandshalter 18 bilden zugleich die seitlichen Begrenzungen der Gefache 12 und sind an ihren Außenflächen entsprechend der Ellipsenform der Böden 16 abgerundet. Durch von den unteren Enden jedes Abstandhalters 18 vorspringende Zapfen 20 und damit fluchtende Löcher 22 in den oberen Oberflächen werden ineinandergreifende Steckverbinder geschaffen, die die Gefachelemente 10 an beiden seitlichen Enden stabil miteinander verbinden.

An die Rückseite des Bodens 16 jedes Gefachelements 10 ist ein weiterer Abstandshalter 24 angeformt, der einen Anschlag für die Rückseite der Hülle 14 bildet und somit die Tiefe des Gefaches begrenzt. Jeder Abstandhalter 24 weist am unteren vorderen Rand eine nach unten vorspringende Zunge 26 auf, die in eine dazu komplementäre Ausnehmung 28 des nächsttieferen Abstandshalters eingreift. Weiterhin weist jeder Abstandshalter 24 an der Rückseite in der Mitte einen Vorsprung 30 auf, in dem mittig eine in vertikaler Richtung durchgehende Bohrung 32 ausgebildet ist. Durch die miteinander fluchtenden Bohrungen 32 sämtlicher Abstandshalter 24 ist eine Stange 34 gesteckt, die sämtliche Gefachelemente 10 zu einer Einheit verbindet.

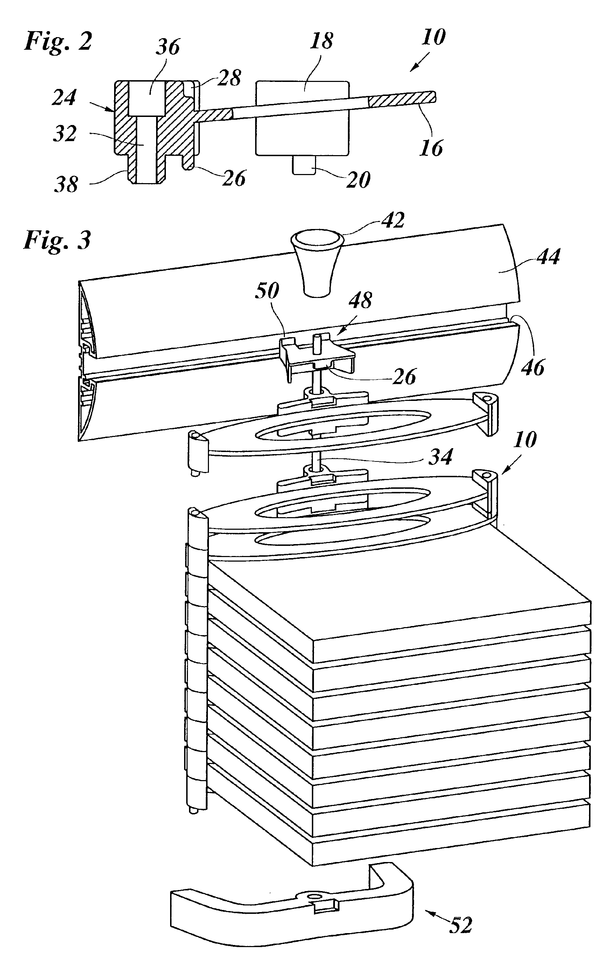

Wie deutlicher in Figur 2 zu erkennen ist, weist die Bohrung 32 am oberen Ende einen erweiterten Abschnitt 36 auf, während der untere Abschnitt der Bohrung die Stange 34 praktisch spielfrei aufnimmt. Das untere Ende der Bohrung 32 ist von einem zylindrischen Zapfen 38 umgeben, der in den erweiterten Abschnitt 36 der Bohrung des nächsttieferen Abstandshalters 24 eingreift. Auf diese Weise wird auch unabhängig von der Stange 34 eine stabile Steckverbindung zwischen den rückseitigen Abstandshaltern 24 der Gefachelemente 10 gebildet, und diese Steckverbindung wird durch die ineinandergreifenden Zungen 26 und Ausnehmungen 28 zusätzlich stabilisiert.

Weiterhin ist in Figur 2 zu erkennen, daß im gezeigten Ausführungsbeispiel der Boden 16 zum freien Ende hin etwas ansteigt, so daß die Hüllen 14 in einer leicht geneigten Position in den Gefachen 12 gehalten werden.

In der in Figur 1 gezeigten Ausführungsform weist der Halter am unteren Ende einen Standfuß 40 auf, in dem die Stange 34 stabil befestigt ist. Das unterste Gefachelement 10 ist unmittelbar auf den Standfuß 40 aufsteckbar, das zu diesem Zweck Löcher 22 für die Zapfen 20 sowie eine Ausnehmung 28 und eine Bohrung für die Zunge 26 und den Zapfen 38 des untersten Gefachelements aufweist.

Am oberen Ende der Stange 34 ist ein Stopfen 42 aufschraubbar oder mit einer Klemmschraube fixierbar. Sämtliche Gefachelemente 10 werden somit zwischen dem Stopfen 42 und dem Standfuß 40 zugfest zusammengehalten.

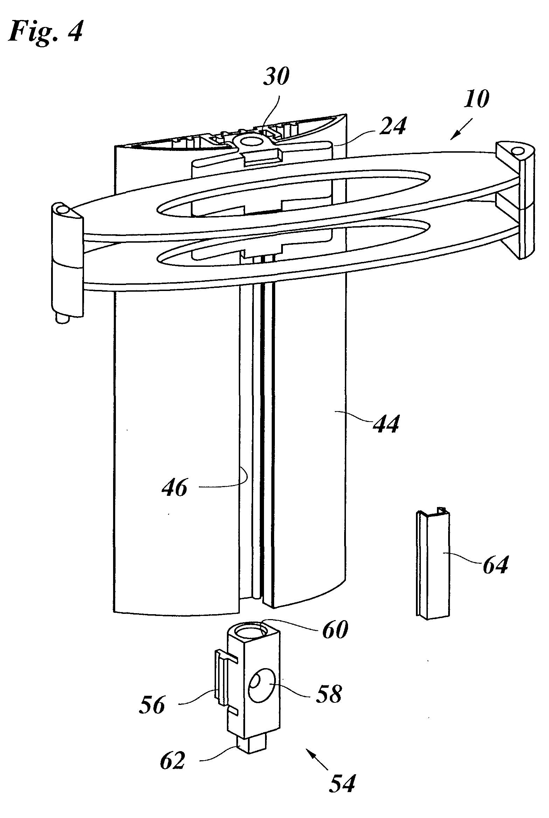

Figuren 3 und 4 zeigen abgewandelte Ausführungsformen, bei denen der Halter für eine Wandmontage ausgebildet ist. Bei diesen Ausführungsformen werden jedoch dieselben Gefachelemente 10 und im Fall der Figur 3 auch derselbe Stopfen 42 und dieselbe Stange 34 wie bei der Ausführungsform nach Figur 1 benutzt.

Gemäß Figur 3 ist der Halter an einer Profilschiene 44 aufgehängt, die waagerecht an einer nicht gezeigten Wand befestigt ist und in der Mitte eine in Längsrichtung durchgehende hinterschnittene Nut 46 aufweist. Das obere Ende der Stange 36 durchsetzt in diesem Fall einen Aufhänger 48, der mit aufwärts gekröpften Klauen 50 in der hinterschnittenen Nut 46 eingehakt ist. Der auf die Stange 34 aufgeschraubte Stopfen 42 stützt sich auf dem Aufhänger 48 ab und hält so den gesamten Halter hängend an der Profilschiene 44.

Der Aufhänger 48 ist auf den Abstandshalter 24 des obersten Gefachelements 10 aufsteckbar und weist zu diesem Zweck eine zu der Ausnehmung 28 komplementäre Zunge 26 auf.

Am unteren Ende der Stange 34 ist hier anstelle des Standfußes 40 eine Wandstütze 52 befestigt, auf die das unterste Gefachelement 10 aufsteckbar ist und die sich mit nach hinten umgebogenen Schenkeln an der nicht gezeigten Wand abstützt, so daß die Stange 34 in einer vertikalen Position gehalten wird.

Figur 4 illustriert eine andere Montageweise, bei der die Profilschiene 44 vertikal an der Wand befestigt ist. In diesem Fall greifen die Vorsprünge 30 der ineinandergesteckten rückwärtigen Abstandshalter 24 der Gefachelemente 10 unmittelbar in die hinterschnittene Nut 46 ein. Die Gewichtskraft des Halters wird von einem unteren Klemmelement 54 aufgenommen, das mit zwei federnden Zungen 56 in die hinterschnittene Nut 46 eingeclipst werden kann, so aß es bündig in dieser Nut liegt. Ein waagerecht, zwischen den beiden Zungen 56, durch das Klemmelement 54 hindurchgehendes Senkloch 58 gestattet es, die beiden Zungen 56 mit Hilfe einer eingedrehten Schraube zu spreizen, so daß sie fest in den Hinterschneidungen der Nut 46 verriegelt werden. Auf diese Weise wird das Klemmelement 54 zugleich kraftschlüssig in der Nut 46 verspannt, so daß es hohe vertikale Kräfte aufnehmen kann.

Im oberen Ende des Klemmelements 54 ist ein Loch 60 ausgebildet, in das der Zapfen 38 des untersten Gefachelements 10 eingreift.

Oberhalb des Halters ist ein nicht gezeigtes, beispielsweise mit dem Klemmelement 54 baugleiches Klemmelement in die Nut 46 eingesetzt. Dieses Klemmelement greift mit einem an seinem unteren Ende ausgebildeten Zapfen 62 in den erweiterten Abschnitt der Bohrung 36 des obersten Gefachelements ein, so daß die Gesamtheit der mit Steckverbindungen ineinandergreifenden Gefachelemente 10 am oberen und unteren Ende in der hinterschnittenen Nut 46 der Profilleiste 44 fixiert wird. Wahlweise kann zur zusätzlichen Stabilisierung auch die durchgesteckte Stange 34 verwendet werden. Die nicht durch die Klemmelemente 54 abgedeckten Bereiche der Nut 46 können mit einem eingerasteten Verblendungsprofil 64 abgedeckt werden.

## Patentansprüche

1. Halter für flache, kastenförmige Datenträgerhüllen (14), mit mehreren übereinander angeordneten Gefachen (12), die die rückwärtigen Enden der Datenträgerhüllen in horizontaler und vertikaler Richtung mit geringem Spiel umschließen, dadurch **gekennzeichnet**, daß die Gefache (12) eine Tiefe aufweisen, die deutlich kleiner ist als die Hälfte der Tiefe der Datenträgerhüllen.

2. Halter nach Anspruch 1, dadurch **gekennzeichnet**, daß er eine variable Anzahl übereinander gestapelter und zugfest miteinander verbundener Gefachelemente (10) aufweist, die als eine Einheit an einem Tragelement (40; 44; 48) gehalten sind.

3. Halter nach Anspruch 2, dadurch **gekennzeichnet**, daß jedes Gefachelement (10) einen flachen, vorzugsweise ellipsenförmigen Boden (16) aufweist, an den an beiden seitlichen Enden Abstandshalter (18) angeformt sind, die die seitlichen Begrenzungen der Gefache (12) bilden und über Steckverbindungen (20, 22) mit den Abstandshaltern (18) der benachbarten Gefachelemente in Eingriff stehen.

4. Halter nach Anspruch 2 oder 3, dadurch **gekennzeichnet**, daß jedes Gefachelement (10) in der Mitte seiner Rückseite einen Abstandshalter (24) aufweist, der die Tiefe des Gefaches (12) begrenzt.

5. Halter nach Anspruch 4, dadurch **gekennzeichnet**, daß die an der Rückseite der Gefachelemente (10) angeordneten Abstandshalter (24) über Steckverbindungen (26, 28; 36, 38) miteinander in Eingriff stehen.

6. Halter nach Anspruch 4 oder 5, dadurch **gekennzeichnet**, daß die an den Rückseiten der Gefachelemente (10) angebrachten Abstandshalter (24) miteinander fluchtende durchgehende Bohrungen (32) aufweisen, die eine durch sämtliche Gefachelemente (10) hindurchgehende Stange (34) aufnehmen, die die zugfeste Verbindung zwischen den Gefachelementen herstellt.

7. Halter nach einem der Ansprüche 2 bis 6, dadurch **gekennzeichnet**, daß das Tragelement ein Standfuß (40) ist.

8. Halter nach den Ansprüchen 6 und 7, dadurch **gekennzeichnet**, daß die Stange (34) im Standfuß (40) verankert ist.

9. Halter nach Anspruch 7 oder 8, dadurch **gekennzeichnet**, daß das unterste Gefachelement (10) auf den Standfuß (40) aufsteckbar ist.

10. Halter nach einem der Ansprüche 2 bis 6, dadurch **gekennzeichnet**, daß das Tragelement ein Aufhänger (48) ist.

11. Halter nach den Ansprüchen 6 und 10, dadurch **gekennzeichnet**, daß der Aufhänger (48) an der Stange (34) befestigt ist.

12. Halter nach Anspruch 11, dadurch **gekennzeichnet**, daß am unteren Ende der Stange (34) eine Wandstütze (52) angebracht ist.

13. Halter nach einem der Ansprüche 10 bis 12, dadurch **gekennzeichnet**, daß der Aufhänger (48) in eine hinterschnittene Nut (46) einer waagerecht an der Wand zu befestigenden Profilschiene (44) eingehakt ist.

14. Halter nach einem der Ansprüche 2 bis 6, dadurch **gekennzeichnet**, daß das Tragelement eine senkrecht an der Wand zu befestigende Profilschiene (44) ist.

15. Halter nach den Ansprüchen 5 und 14, dadurch **gekennzeichnet**, daß die an den Rückseiten der Gefachelemente (10) angebrachten Abstandshalter (24) jeweils an der Rückseite einen Vorsprung (30) aufweisen, der in eine Nut (46) der Profilschiene (44) eingreift, und daß die Vorsprünge (30) sämtlicher Gefachelemente (10) zwischen in die Nut (46) eingesetzten Klemmelementen (54) gehalten sind.

16. Halter nach Anspruch 15, dadurch **gekennzeichnet,** daß die Vorsprünge (30) sämtlicher Gefachelemente (10) miteinander fluchtende vertikale Bohrungen (32) aufweisen, durch die eine Stange (34) zur wahlweisen Befestigung der Gefachelemente an einem anderen Tragelement (40; 48) hindurchsteckbar ist.
